# EUROPÄISCHE PATENTSCHRIFT

(11) **EP 2 936 058 B1**
(45) Veröffentlichungstag und Bekanntmachung des Hinweises auf die Patenterteilung: **18.03.2020**
(21) Anmeldenummer: 13802649.7
(22) Anmeldetag: 11.12.2013
(51) Int. Cl.: G01C 21/16, G01S 19/13

(54) **VERFAHREN ZUM BESTIMMEN EINER REFERENZPOSITION ALS STARTPOSITION FÜR EIN TRÄGHEITSNAVIGATIONSSYSTEM**
METHOD FOR DETERMINING A REFERENCE POSITION AS THE STARTING POSITION FOR AN INERTIAL NAVIGATION SYSTEM
PROCÉDÉ DE DÉTERMINATION D'UNE POSITION DE RÉFÉRENCE EN TANT QUE POSITION DE DÉPART POUR UN SYSTÈME DE NAVIGATION INERTIELLE

(30) Priorität: 20.12.2012 DE 102012224107
(43) Veröffentlichungstag der Anmeldung: 28.10.2015
(73) Patentinhaber: Continental Teves AG & Co. OHG, 60488 Frankfurt am Main (DE)
(72) Erfinder: STÄHLIN, Ulrich, 65760 Eschborn (DE); RINK, Klaus, 63517 Rodenbach (DE); MENZEL, Marc, 35096 Weimar (Lahn) (DE); ZALEWSKI, Michael, 63486 Bruchköbel (DE)
(74) Vertreter: Wagner, Philipp
(86) Internationale Anmeldenummer: PCT/EP2013/076193
(87) Internationale Veröffentlichungsnummer: WO 2014/095510

(56) Entgegenhaltungen:
- EP-A1- 2 019 287
- EP-A2- 2 270 431
- DE-A1-102008 020 446
- DE-A1-102011 007 024
- DE-A1-102011 119 762

## Beschreibung

Die Erfindung betrifft ein Verfahren zum Bestimmen einer Referenzposition als Startposition für ein Trägheitsnavigationssystem, ein Verfahren zum Betreiben eines Trägheitsnavigationssystems basierend auf der bestimmten Referenzposition, ein Verfahren zum Aufzeichnen einer Karte eines Navigationssystems basierend auf der bestimmten Referenzposition, eine Steuervorrichtung zur Durchführung der Verfahren und ein Fahrzeug mit der Steuervorrichtung.

Aus der DE 10 2011 119 762 A1 ist ein System und ein entsprechendes Verfahren zur Positionsbestimmung eines Kraftfahrzeugs bekannt, bei dem die Wiedererkennungshäufigkeit einer Landmarke durch eine Umfelderkennungsvorrichtung in einer digitalen Karte aufgezeichnet wird, und diese Information bei der Lokalisierung des Kraftfahrzeugs mit berücksichtigt wird.

Aus der WO 2011 / 098 333 A1 ist bekannt, in einem Fahrzeug verschiedene Sensorgrößen heranzuziehen, um bereits vorhandene Sensorgrößen zu verbessern oder neue Sensorgrößen zu generieren und somit die erfassbare Information zu steigern.

Es ist Aufgabe die Nutzung mehrerer Sensorgrößen zur Informationssteigerung zu verbessern.

Die Aufgabe wird durch die Merkmale der unabhängigen Ansprüche gelöst. Bevorzugte Weiterbildungen sind Gegenstand der abhängigen Ansprüche.

Das erfindungsgemäße Verfahren umfasst die Schritte:
- Erfassen einer Umgebungsbedingung um das Fahrzeug,
- Bestimmen einer Position des Fahrzeuges am Ort der erfassten Umgebungsbedingung, und
- Zuordnen der bestimmten Position als Referenzposition zu der erfassten Umgebungsbedingung.

Dem angegebenen Verfahren liegt die Überlegung zugrunde, dass ein Trägheitsnavigationssystem ein Sensorsystem zur Bestimmung einer Positionsänderung eines sich in einem Raum bewegenden Objektes, wie ein Fahrzeug ist. Zur Bestimmung einer absoluten Position des Objektes ist daher eine Startposition des Objektes als Bezugsposition notwendig, von der aus die Positionsänderung des Objektes betrachtet wird, um die absolute Position des Objektes zu bestimmen.

Um diese Startposition zu bestimmen, wird im Rahmen des angegebenen Verfahrens vorgeschlagen, eine Referenzposition an einer bekannten absoluten Position zu verwenden, die sich das Fahrzeug anhand eines bekannten Umgebungszustandes an dieser bekannten absoluten Position ermitteln kann. Dabei ist es zur Durchführung des Verfahrens gleichgültig, welche absoluten Positionen als Referenzpositionen, welche Umgebungsbedingungen an diesen absoluten Positionen diesen Referenzpositionen zugeordnet werden. Wichtig ist dabei nur, dass die Umgebungsbedingung für das Fahrzeug erfassbar und ihr eine eindeutige Referenzposition zugeordnet ist, die das Trägheitsnavigationssystem als Bezugsposition zur weiteren Ortung des Fahrzeuges verwenden kann. Die so ermittelte Referenzposition könnte beispielsweise direkt als Startposition verwendet werden. Alternativ könnte die Referenzposition aber auch zur Berechnung der Startposition verwendet werden, wenn beispielsweise eine bereits bekannte Startposition basierend auf der Referenzposition korrigiert werden soll.

Auf diese Weise wäre das Fahrzeug von absolut ortenden Navigationssystemen, wie beispielsweise Satellitennavigationssystemen unabhängig und könnte beispielsweise im Falle eines Ausfalls der Satelliten durch einen Betriebsausfall oder im Falle eines Ausfalls des Satellitensignals unter einem Tunnel weiterbetrieben werden.

In besonders günstiger Weise könnte die Startposition durch direktes oder indirektes Korrigieren der Referenzposition basierend auf einer Position des Fahrzeuges bestimmt werden, die mit einem Satellitennavigationssystem bestimmt wird. Direkt Korrigieren soll dabei heißen, dass die Referenzposition unmittelbar ohne weitere Zwischenschritte mit der Position aus dem Satellitennavigationssystem verrechnet wird. Indirekt Korrigieren soll dabei heißen, dass die Referenzposition dabei zuvor beispielsweise mit einer anderen Position verrechnet wird, wobei das Ergebnis dann mit der Position des Satellitennavigationssystems verrechnet wird.

Derartige Lokalisierungssysteme oder Ortungssysteme, bei denen zur Ortung des Fahrzeuges ein Satellitennavigationssystem und ein Trägheitsnavigationssystem verknüpft wird, sind als loosly coupled GNSS Systeme, tightly coupled GNSS Systeme oder deeply coupled GNSS System bekannt. Sie weisen jedoch alle das Problem auf, dass mittels Fahrdynamiksensoren im Rahmen der Trägheitsnavigation nur die relative Lokalisation verbessert werden kann. Zur Korrektur einer falschen Startposition wäre jedoch ein zusätzlicher, besserer und damit teurerer Satellitennavigationsempfänger notwendig. Damit bestimmen die Satellitennavigationsempfänger in einem zuvor genannten Ortungssystem die absolute Genauigkeit maßgeblich.

Treten jedoch Störungen, wie beispielsweise atmosphärische Störungen auf, die von üblichen Satellitennavigationsempfängern nicht kompensiert werden können, geht folglich auch das Trägheitsnavigationssystem bei der Ortung des Fahrzeuges von einer entsprechend falschen Startposition aus.

Hier setzt der dem Verfahren zugrundeliegende Gedanke an, indem auf der Straße anhand von Umgebungsbedingungen Referenzpositionen gesucht werden, deren absolute Lage im Raum bekannt ist, und die damit als redundante Information zur Korrektur einer potentiell falschen Startposition eines Satellitennavigationssystems in einem zuvor genannten Ortungssystem verwendet werden können.

Erfindungsgemäß wird die bestimmte Position als Referenzposition zu der erfassten Umgebungsbedingung basierend auf einer Wahrscheinlichkeit, mit der die Referenzposition vom Fahrzeug passiert wird, zugeordnet. Hierbei liegt die Überlegung zugrunde, dass sich das Fahrzeug die Referenzpositionen selbst schaffen kann, indem es an Orten, die es immer wieder passiert die Umgebungsbedingungen um einen solchen Ort speichert, die Position an dieser Stelle ortet, also bestimmt, und der gespeicherten Umgebungsbedingung dann die geortete, also bestimmte Position als Referenzposition zuordnet. Auf diese Weise kann das Fahrzeug bei der Rückkehr an diese Ort diesen durch den Vergleich mit den gespeicherten Umgebungsbedingungen erfassen und anschließend die der gespeicherten Umgebungsbedingung zugeordnete Referenzposition für den weiteren Betrieb des Ortungssystems verwenden.

Die Wahrscheinlichkeit hängt dabei von einer Häufigkeit ab, mit der die Umgebungsbedingung erfasst wird, der die bestimmte Position als Referenzposition zugeordnet wird, da sichergestellt werden sollte, dass das Fahrzeug häufiger an den Ort zurückkehrt. Um einen unnötig hohen Speicherplatzbedarf für Orte zu vermeiden, an die das Fahrzeug nicht noch einmal zurückkehrt, sollte die Häufigkeit so hoch ausgelegt werden, dass ausschließlich regelmäßig befahrende Strecken, wie Pendelstrecken zwischen Arbeit und zu Hause bei der Bestimmung der Referenzposition im Rahmen des angegebenen Verfahrens berücksichtigt werden.

Gemäß der Erfindung ist die Referenzposition ein Mittelungswert einer Anzahl an bestimmten Positionen an der Stelle der erfassten Umgebungsbedingung um das Fahrzeug. Das heißt, dass jedes Mal oder in bestimmten Anständen, wenn das Fahrzeug den Ort passiert, an denen die der Referenzposition zugeordneten Umgebungsbedingungen erfasst werden, auch die Position selbst durch das Ortungssystem erfasst wird. Die so in der Summe erfassten Positionen werden dann mit einer Mittelung gefiltert, um beispielsweise die oben genannten atmosphärischen Störungen über die Zeit zu eliminieren, die zu Fehlern in der Referenzposition führen.

In einer Weiterbildung umfasst das angegebene Verfahren den Schritt Auslösen der Erfassung der Umgebungsbedingung basierend auf einem charakteristischen Ereignis. Dieses charakteristische Ereignis stellt einen Trigger dar, um eine kontinuierliche Erfassung der Umgebungsbedingungen und damit einen exorbitant hohen Speicherverbrauch zum Speichern der erfassten Umgebungsbedingungen zu vermeiden. Das charakteristische Ereignis kann ereignisorientiert, beispielsweise anhand bestimmter Objekte auf der Straße wie Ampeln, u.s.w. oder zeitorientiert ausgelegt werden.

In einer bevorzugten Weiterbildung ist das charakteristische Ereignis ein vorbestimmter Zeitpunkt oder Zeitraum. Die zeitorientierte Erfassung der Umgebungsbedingungen ist besonders günstig, da auf diese Weise in regelmäßigen Abständen überprüft werden kann, welche Ortsbereiche häufiger angefahren werden und welche nicht.

Gemäß einem weiteren Aspekt der Erfindung umfasst ein Verfahren zum Betreiben eines Trägheitsnavigationssystems, das eingerichtet ist, eine absolute Position eines Fahrzeuges zu bestimmen, die Schritte:
- Bestimmen einer Referenzposition mit dem Verfahren gemäß Anspruch 1,
- Bestimmen einer Startposition für das Trägheitsnavigationssystem basierend auf der Referenzposition, und
- Bestimmen der absoluten Position des Fahrzeuges basierend auf der Startposition.

Die Startposition kann dabei basierend in der oben beschriebenen Weise basierend auf der Referenzposition bestimmt werden.

Gemäß einem weiteren Aspekt der Erfindung umfasst ein Verfahren zum Aufzeichnen einer Karte eines Navigationssystems die Schritte:
- Bestimmen einer Referenzposition mit dem Verfahren gemäß Anspruch 1 und
- Eintragen der bestimmten Referenzposition als Metadatum und/oder Straßenabschnitt in die Karte.

Dem angegebenen Verfahren liegt die Überlegung zugrunde, dass erkannte Referenzpunkte, an denen sich das Fahrzeug häufiger befindet, auch zur Plausibilisierung von Kartenmaterial herangezogen werden könnte. Wenn das Kartenmaterial veraltet ist, könnte es basierend auf den bestimmten Referenzpositionen aktualisiert werden.

Als Startposition im Sinne des Verfahrens sind dabei alle Positionen zu verstehen, von denen aus eine Fortschreibung mittels inkrementeller Verfahren durchgeführt wird, wobei als inkrementelle Verfahren beispielsweise auch Filterungen auf Basis von Fahrdynamikdaten zu verstehen sind.

Gemäß einem weiteren Aspekt der Erfindung ist eine Steuervorrichtung eingerichtet, eines der angegebenen Verfahren durchzuführen.

In einer Weiterbildung der angegebenen Steuervorrichtung weist die angegebene Vorrichtung einen Speicher und einen Prozessor auf. Dabei ist eines angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines Fahrzeuges auf einer Straße,
Fig. 2 eine Prinzipdarstellung eines Fusionssensors in dem Fahrzeug der Fig. 1, und
Fig. 3 eine Prinzipdarstellung des Fahrzeuges aus Fig. 1 auf einer Straße zeigen.

In den Figuren werden gleiche technische Elemente mit gleichen Bezugszeichen versehen und nur einmal beschrieben.

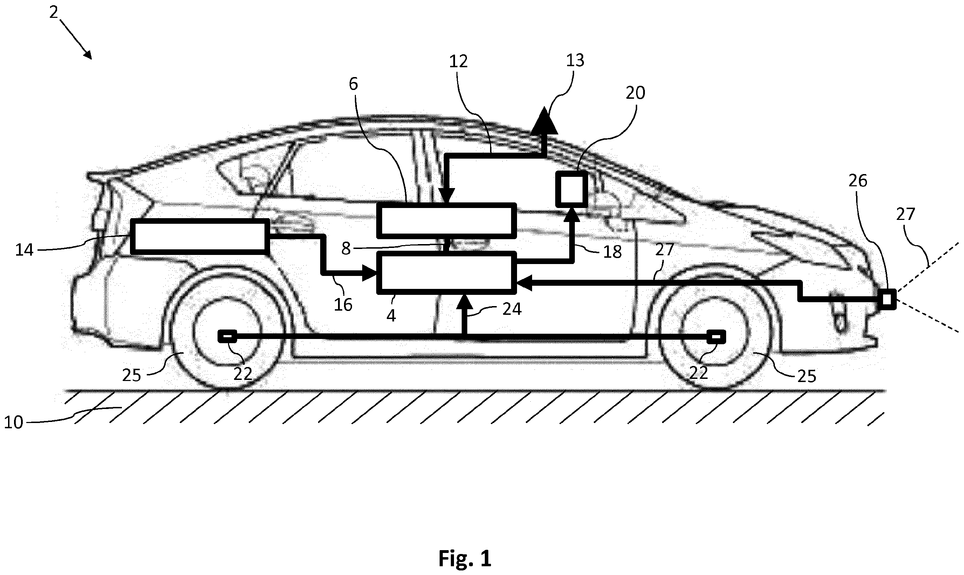

Es wird auf Fig. 1 Bezug genommen, die eine Prinzipdarstellung eines Fahrzeuges 2 mit einem Fusionssensor 4 zeigt.

Der Fusionssensor 4 empfängt in der vorliegenden Ausfüh-rungsform über einen an sich bekannten GNSS-Empfänger 6 Lagedaten 8 des Fahrzeuges 2, die eine absolute Position des Fahrzeuges 2 auf einer Fahrbahn 10 umfassen. Neben der absoluten Position umfassend die Lagedaten 8 aus dem GNSS-Empfänger 6 auch eine Geschwindigkeit des Fahrzeuges 2. Die Lagedaten 8 aus dem GNSS-Empfänger 6 werden in der vorliegenden Ausführung in einer dem Fachmann bekannten Weise aus einem GNSS-Signal 12 in dem GNSS-Empfänger 6 abgeleitet, das über eine GNSS-Antenne 13 empfangen wird und daher nachstehend GNSS-Lagedaten 8 genannt. Für Details dazu wird auf die einschlägige Fachliteratur dazu verwiesen.

Der Fusionssensor 4 ist in einer noch zu beschreibenden Weise dazu ausgebildet, den Informationsgehalt der aus dem GNSS-Signal 12 abgeleiteten GNSS-Lagedaten 8 zu steigern. Dies ist einerseits notwendig, da das GNSS-Signal 12 einen sehr niedrigen Signal/Rauschbandabstand aufweisen und so sehr ungenau sein kann. Andererseits ist das GNSS-Signal 12 nicht ständig verfügbar.

In der vorliegenden Ausführung weist das Fahrzeug 2 dazu einen Inertialsensor 14 auf, der Fahrdynamikdaten 16 des Fahrzeuges 2 erfasst. Darunter fallen bekanntermaßen eine Längsbeschleunigung, eine Querbeschleunigung sowie eine Vertikalbeschleunigung und eine Wankrate, eine Nickrate sowie eine Gierrate des Fahrzeuges 2. Diese Fahrdynamikdaten 16 werden in der vorliegenden Ausführung herangezogen, um den Informationsgehalt der GNSS-Lagedaten 8 zu steigern und beispielsweise die Position und die Geschwindigkeit des Fahrzeuges 2 auf der Fahrbahn 10 zu präzisieren. Die präzisierten Lagedaten 18 können dann von einem Navigationsgerät 20 selbst dann verwendet werden, wenn das GNSS-Signal 12 beispielsweise unter einem Tunnel überhaupt nicht verfügbar ist.

Zur weiteren Steigerung des Informationsgehaltes der GNSS-Lagedaten 8 können in der vorliegenden Ausführung optional noch Raddrehzahlsensoren 22 verwendet werden, die die Rad-drehzahlen 24 der einzelnen Räder 25 des Fahrzeuges 2 erfassen.

In der vorliegenden Ausführung weist das Fahrzeug 2 weiter einen Umfeldsensor 26 in Form einer Frontkamera 26 auf, die in einer nicht weiter referenzierten Fahrtrichtung des Fahrzeuges 2 betrachtet ein Bild 27 vor dem Fahrzeug 2 aufnimmt und an den Fusionssensor 4 ausgibt. Auf Details dazu wird an späterer Stelle näher eingegangen.

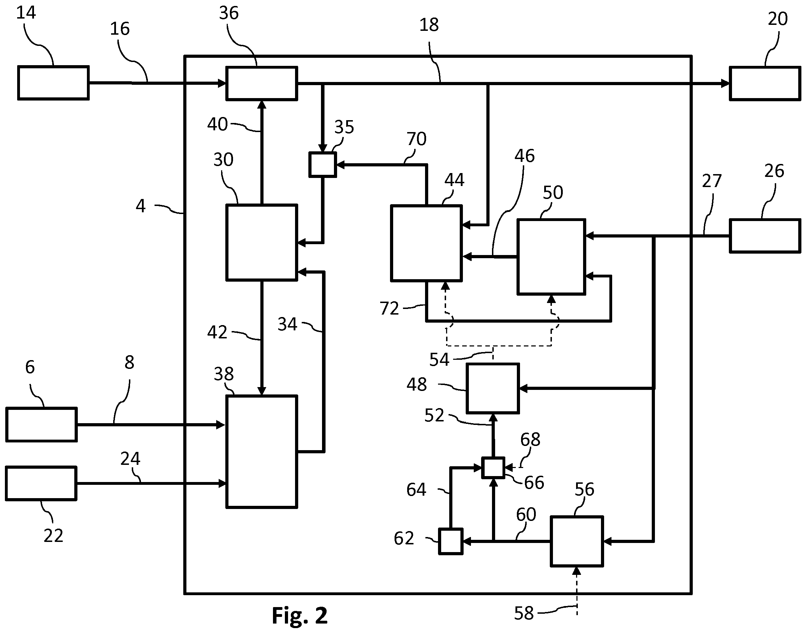

Es wird auf Fig. 2 Bezug genommen, die eine Prinzipdarstellung Fusionssensors 4 aus Fig. 1 zeigt.

In den Fusionssensor 4 gehen die in Fig. 1 bereits erwähnten Messdaten ein. Der Fusionssensor 4 soll die präzisierten Lagedaten 18 ausgeben. Grundgedanke dazu ist es, die Information aus den GNSS-Lagedaten 8 den Fahrdynamikdaten 16 aus dem Inertialsensor 14 in ein Filter 30 gegenüberzustellen und so einen Signal/Rauschbandabstand in den Lagedaten 8 des GNSS-Empfängers 6 oder den Fahrdynamikdaten 16 aus dem Inertialsensor 14 zu erhöhen. Dazu kann das Filter zwar beliebig ausgebildet sein, ein Kalman-Filter löst diese Aufgabe am wirkungsvollsten mit einem vergleichsweise geringen Rechenressourcenanspruch. Daher soll das Filter 30 nachstehend vorzugsweise ein Kalman-Filter 30 sein.

In das Kalman-Filter 30 gehen über ein noch zu beschreibendes Korrekturglied 35 die präzisierten Lagedaten 18 des Fahrzeuges 2 und Vergleichslagedaten 34 des Fahrzeuges 2 ein. Die präzisierten Lagedaten 18 werden in der vorliegenden Ausführung in einem beispielsweise aus der DE 10 2006 029 148 A1 bekannten Strapdown-Algorithmus 36 aus den Fahrdynamikdaten 16 generiert. Sie enthalten präzisierten Positionsinformationen über das Fahrzeug, aber auch andere Lagedaten über das Fahrzeug 2, wie beispielsweise seine Geschwindigkeit, seine Beschleunigung und sein Heading. Demgegenüber werden die Vergleichslagedaten 34 aus einem Modell 38 des Fahrzeuges 2 gewonnen, das zunächst einmal aus dem GNSS-Empfänger 6 mit den GNSS-Lagedaten 8 gespeist wird. Aus diesen GNSS-Lagedaten 8 werden dann in dem Modell 38 die Vergleichslagedaten 34 bestimmt, die die gleichen Informationen enthalten, wie die präzisierten Lagedaten 18. Die präzisierten Lagedaten 18 und die Vergleichslagedaten 34 unterscheiden sich lediglich in ihren Werten.

Das Kalman-Filter 30 berechnet basierend auf den präzisierten Lagedaten 18 und den Vergleichslagedaten 34 einen Fehlerhaushalt 40 für die präzisierten Lagedaten 18 und einen Fehlerhaushalt 42 für die Vergleichslagedaten 34. Unter einem Fehlerhaushalt soll nachstehend ein Gesamtfehler in einem Signal verstanden werden, der sich aus verschiedenen Einzelfehlern bei der Erfassung und Übertragung des Signals zusammensetzt. Bei dem GNSS-Signal 12 und damit bei den GNSS-Lagedaten 8 kann sich ein entsprechender Fehlerhaushalt aus Fehlern der Satellitenbahn, der Satellitenuhr, der restlichen Refraktionseffekte und aus Fehlern im GNSS-Empfänger 6 zusammensetzen.

Der Fehlerhaushalt 40 der präzisierten Lagedaten 18 und der Fehlerhaushalt 42 der Vergleichslagedaten 34 werden dann entsprechend dem Strapdown-Algorithmus 36 und dem Modell 38 zur Korrektur der präzisierten Lagedaten 18 beziehungsweise der Vergleichslagedaten 34 zugeführt. Das heißt, dass die präzisierten Lagedaten 18 und die Vergleichslagedaten 34 iterativ um ihre Fehler bereinigt werden.

Das Fusionsfilter 4 kann in der oben beschriebenen Weise die Fahrdynamikdaten 16 des Fahrzeuges 2, die durch den Inertialsensor 14 erfasst werden, basierend auf den GNSS-Lagedaten 8 und den Raddrehzahlen 24 recht gut korrigieren.

Anders verhält es sich jedoch mit einer absoluten Position des Fahrzeuges 2, für die eigentlich nur der GNSS-Empfänger 6 verfügbar wäre, der die absolute Position des Fahrzeuges 2 mit den GNSS-Lagedaten 8 ausgibt. Da im Fahrzeug 2 für die absolute Position des Fahrzeuges 2 keine Vergleichswerte verfügbar sind, können Fehler bei der Erfassung der absoluten Position, wie beispielsweise atmosphärische Störungen nicht korrigiert werden und verringern daher die Datenintegrität der präzisierten Lagedaten 18.

Zur Steigerung der Datenintegrität der präzisierten Lagedaten 18 schlägt die vorliegende Ausführung vor, sich diese Vergleichswerte für die absolute Position des Fahrzeuges zu schaffen. Dazu ist in der vorliegenden Ausführung ein weiteres Filter 44 vorgesehen, das analog zum Filter 30 gewählt werden kann und beispielsweise ein Kalman-Filter 44 sein soll. Beide Filter 30, 44 sind in der vorliegenden Ausführung nur der Übersichtlichkeit halber getrennte Elemente ausgeführt, und können beispielsweise auch ein gemeinsames Filter sein, worauf aber der Kürze halber nicht näher eingegangen werden soll.

In der vorliegenden Ausführung soll eine zur Korrektur der absoluten Position verwendete Referenzposition 46 iterativ über das weitere Kalman-Filter 44 bestimmt werden. Dazu ist in der vorliegenden Ausführung eine Bilderkennungseinrichtung 48 angeordnet, die das Bild 27 aus der in Fig. 1 gezeigten Kamera 26 empfängt und das weitere Kalman-Filter 44 und einen noch zu beschreibenden Speicher 50 basierend auf einem vorbestimmten, in dem Bild 27 erkannten Objekt 52 mit einem Aktivierungssignal 54 aktiviert.

Das vorbestimmte Objekt 52 wird in der vorliegenden Ausführung von einer Sucheinrichtung 56 generiert, die in dem Bild 27 basierend auf einem Zeitsignal 58 in regelmäßigen Abständen nach geeigneten Objekten 60 zur Festlegung der Referenzposition 46 sucht. Das von der Sucheinrichtung 56 gefundene geeignete Objekt 60 wird in einem Zählspeicher 62 hinterlegt, der dem geeigneten Objekt 60 einen Zählwert 64 zuordnet, aus dem ersichtlich ist, wie oft die Suchvorrichtung 56 das geeignete Objekt 56 bereits gefunden hat. Fährt ein Fahrer des Fahrzeuges 2 beispielsweise jeden Tag auf einer gleichen Strecke zur Arbeit und kommt in einem durch das Zeitsignal 58 vorgegebenen Zeitrahmen von 5 bis 8 Minuten beispielsweise an einer Ampel als für die Festlegung der Referenzposition 46 geeignetes Objekt 60 an, dann wird diese Ampel im Zählspeicher 62 hinterlegt. Das im Zählspeicher 62 hinterlegte Objekt 60 wird dabei als vorbestimmtes Objekt 52 für die Bilderkennung freigegeben, wenn eine Freigabeeinrichtung 66 erkennt, dass der Zählwert 64 einen vorbestimmten Schwellwert 68 beispielsweise 3, 5 oder 10 überschreitet, so dass das geeignete Objekt 60 als Objekt erkannt wird, dass auf einer regelmäßig befahrenen Strecke liegt.

Ist das vorbestimmte Objekt 52 zur Bilderkennung freigegebenen, und erkennt die Bilderkennungseinrichtung 48, die im Übrigen auch gemeinsam mit der Sucheinrichtung 56 ausgebildet sein könnte, das vorbestimmte Objekt 52 im Bild 27, dann werden das weitere Kalman-Filter 44 und der oben genannte Speicher 50 mit dem Aktivierungssignal 54 aktiviert. Das weitere Kalman-Filter 44 liest aus dem Speicher 50 die Referenzposition 46 aus und stellt diese in einer dem Fachmann bekannten Weise der präzisierten Lage 18 gegenüber. Auf diese kann im weiteren Kalman-Filter 44 ein Lagefehler 70 in der präzisierten Lage 18 und ein Referenzfehler 72 in der Referenzposition 46 gefunden werden.

Mit dem Lagefehler 70 kann dann die präzisierte Lage 18 vor dem Zuführen zum ersten Kalman-Filter 30 über die bereits genannte Korrektureinrichtung 35 korrigiert werden. Gleichfalls kann mit dem Referenzfehler 72 die Referenzposition 46 im Speicher 50 in einer nicht näher dargestellten aber an sich bekannten Weise korrigiert werden. Die im Speicher gespeicherte Referenzposition 46 wird auf diese Weise jedes Mal, wenn das Fahrzeug 2 das vorbestimmte Objekt 52 passiert korrigiert, so dass sich die Referenzposition 46 über die Zeit der exakten Position des vorbestimmten Objekts 52 annähert.

Durch den in der präzisierten Lage 18 korrigierten Lagefehler 70 wird auch der Fehlerhaushalt 40 und damit der Startwert für den Strapdown-Algorithmus 36 korrigiert, so dass der Strapdown-Algorithmus 36 eine genauere präzisierte Lage 18 ausgibt.

In der vorliegenden Ausführung wurde der Speicher 50 als ein Speicher betrachtet, der nur eine einzige Referenzposition 46 speichert. Jedoch kann der Speicher 50 auch mehrere Referenzpositionen 46 speichern, an denen sich verschiedene vorbestimmte Objekte 52 befinden. Hierzu müssen die vorbestimmten Objekte 52 und ihre Referenzposition 46 im Speicher 50 in einer an sich bekannten Weise miteinander verknüpft werden. Darauf wurde im vorliegenden Ausführungsbeispiel der Übersichtlichkeit halber verzichtet.

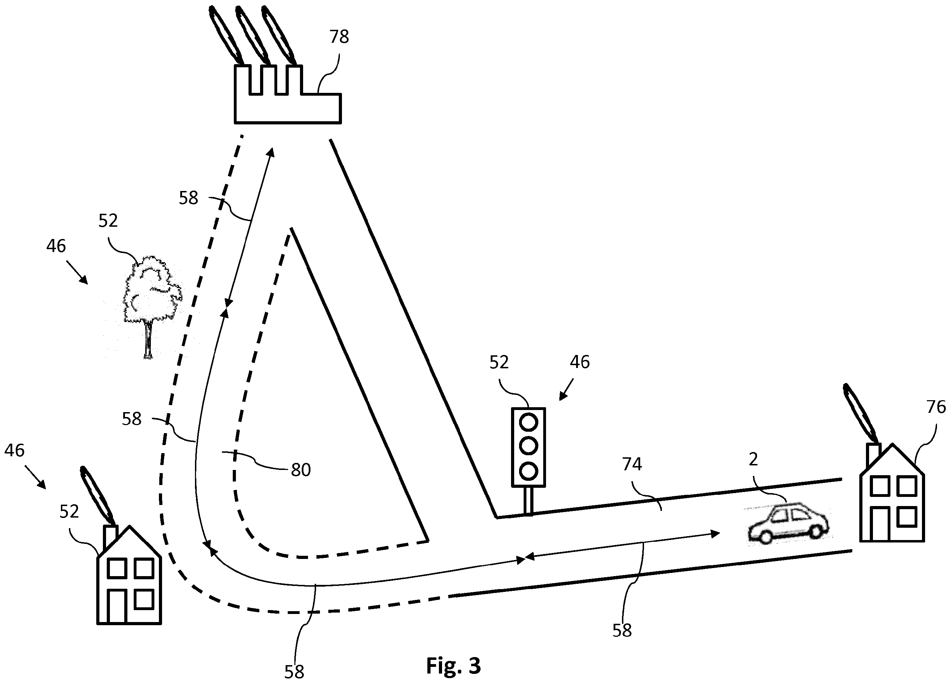

Es wird auf Fig. 3 Bezug genommen, die eine Prinzipdarstellung des Fahrzeuges 2 aus Fig. 1 auf einer Straße 74 zeigen.

Das Fahrzeug 2 soll auf der Straße 74 zwischen einem Heim 76 des Fahrers des Fahrzeuges 2 und seinem Arbeitsplatz 78 täglich pendeln.

Dabei soll angenommen werden, dass die Straße 74 in einem Bereich auf einen neuen, gestrichelt dargestellten Straßenabschnitt 80 umgelegt wurde. Eine Karte in dem Navigationssystem 20 des Fahrzeuges 2 könnte diesen neuen Straßenabschnitt 80 nicht umfassen.

In besonders günstiger Weise ließe sich dieser neue Straßenabschnitt 80 jedoch durch das angegebene Verfahren, das beispielsweise in dem Fusionssensor 4 in der bereits beispielhaft beschriebenen Weise ausgeführt wird, ergänzen.

Im Rahmen der Fig. 3 definiert das Zeitsignal 58 basierend auf einer angenommenen Durchschnittsgeschwindigkeit des Fahrzeuges 2 Streckenabschnitte auf dem Weg zwischen Heim 76 und Arbeit 78, wobei die einzelnen Streckenabschnitte dem besseren Verständnis halber mit dem Bezugszeichen des Zeitsignals 58 versehen sind. Wenn das Fahrzeug 2 ein geeignetes Objekt 60, das in Fig. 3 beispielhafterweise eine Ampel, ein Haus und ein Baum ist, mit einer durch den Schwellwert 68 bestimmten ausreichend hohen Häufigkeit anfährt, das geeignete Objekt 60 so als vorbestimmtes Objekt 52 ausgewählt und ihm eine Referenzposition 46 in der oben beschriebenen Weise zugeordnet wird, dann kann davon ausgegangen werden, dass der Straßenverlauf der Straße 74 diese Referenzpositionen 46 umfasst. Daher können diese Referenzpositionen 46 auch herangezogen werden, um die Karte in dem Navigationsgerät 20 um den neuen Straßenverlauf 80 zu ergänzen.

## Patentansprüche

1. Verfahren zum Bestimmen einer Referenzposition (46) als Grundlage für eine Startposition (40) eines Trägheitsnavigationssystems (36), das eingerichtet ist, ausgehend von der Startposition (40) und einer relativen Positionsänderung (16) eines Fahrzeuges (2) das Fahrzeug (2) zu orten, umfassend:
- Erfassen einer Umgebungsbedingung (52) um das Fahrzeug (2) mit einem Umfeldsensor (26) des Fahrzeugs (2),
- Bestimmen einer Position (34, 18) des Fahrzeuges (2) am Ort der erfassten Umgebungsbedingung (52), und
- Zuordnen der bestimmten Position (34, 18) als Referenzposition (46) zu der erfassten Umgebungsbedingung (52), wobei die bestimmte Position (34, 18) als Referenzposition (46) zu der erfassten Umgebungsbedingung (52) basierend auf einer Wahrscheinlichkeit (58), mit der die Referenzposition (46) vom Fahrzeug (2) passiert wird, zugeordnet wird,
wobei die Wahrscheinlichkeit (58) von einer Häufigkeit (58) abhängig ist, mit der die Umgebungsbedingung (52) erfasst wird, der die bestimmte Position (34, 18) als Referenzposition (46) zugeordnet wird, **dadurch gekennzeichnet, dass** die Referenzposition (46) ein Mittelungswert einer Anzahl an bestimmten Positionen (34, 18) an der Stelle der erfassten Umgebungsbedingung (52) um das Fahrzeug (2) ist.

2. Verfahren nach Anspruch 1, umfassend:
- Auslösen (66) der Erfassung der Umgebungsbedingung (52) basierend auf einem charakteristischen Ereignis (68), wobei das charakteristische Ereignis (68) ein vorbestimmter Zeitpunkt oder Zeitraum ist.

3. Verfahren zum Betreiben eines Trägheitsnavigationssystems (36), das eingerichtet ist, eine absolute Position (18) eines Fahrzeuges (2) zu bestimmen, umfassend:
- Bestimmen einer Referenzposition (46) mit einem Verfahren nach einem der vorstehenden Ansprüche,
- Bestimmen einer Startposition (40) für das Trägheitsnavigationssystem (36) basierend auf der Referenzposition (46), und
- Bestimmen der absoluten Position (18) des Fahrzeuges (2) basierend auf der Startposition (46).

4. Steuervorrichtung (4), die eingerichtet ist, ein Verfahren nach einem der vorstehenden Ansprüche durchzuführen.

## Claims

1. A method for determining a reference position (46) as the basis for a starting position (40) for an inertial navigation system (36), which is designed to determine the location of a vehicle (2) from the starting position (40) and a relative position change (16) of the vehicle (2), the method comprising:
- detecting an ambient condition (52) around the vehicle (2) with an environment sensor (26) of the vehicle (2),
- determining a position (34, 18) of the vehicle (2) at the location of the detected ambient condition (52), and
- assigning the determined position (34, 18) to the detected ambient condition (52) as a reference position (46), wherein the determined position (34, 18) is associated as a reference position (46) with the detected ambient condition (52) on the basis of a probability (58) with which the vehicle (2) passes the reference position (46),
wherein the probability (58) depends on a frequency (58) with which the ambient condition (52) is detected, which is associated with the determined position (34, 18) as a reference position (46),
**characterised in that**
the reference position (46) is an averaging value from a number of determined positions (34, 18) at the point of the detected ambient condition (52) around the vehicle (2).

2. The method according to Claim 1, comprising:
initiating (66) the detection of the ambient condition (52) on the basis of a characteristic event (68), wherein the characteristic event (68) is a predetermined point in time or period of time.

3. A method for operating an inertial navigation system (36), which is designed to determine an absolute position (18) of a vehicle (2), comprising:
- determining a reference position (46) with a method according to any one of the preceding claims,
- determining a starting position (40) for the inertial navigation system (36) on the basis of the reference position (46), and
- determining the absolute position (18) of the vehicle (2) on the basis of the starting position (46).

4. A control device (4) which is designed to implement a method according to any one of the preceding claims.

## Revendications

1. Procédé pour la détermination d'une position de référence (46) comme base pour une position de départ (40) d'un système de navigation inertielle (36), lequel est configuré pour localiser un véhicule (2), à partir de la position de départ (40) et d'un changement de position relatif (16) du véhicule (2), comprenant :
- détection d'une condition d'environnement (52) autour d'un véhicule (2) avec un capteur d'environnement (26) du véhicule (2),
- détermination d'une position (34, 18) du véhicule (2) à l'endroit de la condition d'environnement détectée (52), et
- attribution de la position déterminée (34, 18) comme position de référence (46) à la condition d'environnement détectée (52), la position déterminée (34, 18) étant attribuée comme position de référence (46) à la condition d'environnement détectée (52) basé sur une probabilité (58) avec laquelle la position de référence (46) du véhicule (2) est franchie,
la probabilité (58) étant fonction d'une fréquence (58) avec laquelle la condition d'environnement (52) à laquelle la position de référence (34, 18) est attribuée comme position de référence (46) est détectée,
**caractérisé en ce que**
la position de référence (46) est une valeur moyenne d'un nombre de positions déterminées (34, 18) à l'emplacement de la condition d'environnement (52) détectée autour du véhicule (2).

2. Procédé selon la revendication 1, 2 comprenant :
- déclenchement (66) de la détection de la condition d'environnement (52) basé sur un événement caractéristique (68), l'événement caractéristique (68) étant un instant prédéterminé ou une période prédéterminée.

3. Procédé pour l'exploitation d'un système de navigation inertielle (36), lequel est configuré pour déterminer une position absolue (18) d'un véhicule (2), comprenant :
- détermination d'une position de référence (46) avec un procédé selon l'une des revendications précédentes,
- détermination d'une position de départ (40) pour le système de navigation inertielle (36) basé sur la position de référence (46), et
- détermination de la position absolue (18) du véhicule (2) basé sur la position de départ (46).

4. Dispositif de commande (4), lequel est configuré pour exécuter un procédé selon l'une des revendications précédentes.
